# EUROPÄISCHE PATENTSCHRIFT

(11) **EP 1 738 968 B1**
(45) Veröffentlichungstag und Bekanntmachung des Hinweises auf die Patenterteilung: **22.04.2009**
(21) Anmeldenummer: 06012726.3
(22) Anmeldetag: 21.06.2006
(51) Int. Cl.: B60R 21/16

(54) **Gassack**
Airbag
Coussin gonflable

(30) Priorität: 01.07.2005 DE 102005030873
(43) Veröffentlichungstag der Anmeldung: 03.01.2007
(73) Patentinhaber: TRW Automotive GmbH, 73553 Alfdorf (DE)
(72) Erfinder: Lutz, Joachim, 73579 Schechingen (DE); Werner, Nico, 73553 Alfdorf (DE); Burkhardtsmaier, Martin, 73529 Schwäbisch Gmünd (DE)
(74) Vertreter: Prinz & Partner

(56) Entgegenhaltungen:
- EP-A- 1 024 060
- US-A1- 2001 040 368
- US-A1- 2003 201 631

## Beschreibung

Die Erfindung betrifft einen Gassack gemäß dem Oberbegriff des Anspruchs 1.

Das Nähen eines Gassacks ist einer der arbeitsaufwendigsten und damit teuersten Herstellungsschritte bei der Fertigung eines Gassacks. Vor allem bei Gassäcken, die ihre dreidimensionale Gestalt im aufgeblasenen Zustand dadurch erhalten, daß ihre äußere Hülle nicht nur aus zwei flach aufeinandergenähten Wandungsteilen besteht, müssen oft Nähte geschlossen werden, für die sich die Wandungsteile nicht vollständig flach auf einem Tisch ausbreiten lassen. Diese Art der Verarbeitung ist umständlich und teuer, da die Wandungsteile nicht automatisiert vernäht werden können, sondern manuell vernäht werden müssen. Daher ist man bestrebt, Wandungsteile auch für dreidimensionale Gassäcke zu schaffen, bei denen alle Nahtvorgänge bei flach auf einer Unterlage liegenden Wandungsteilen mit sogenannten "zweidimensionalen Nähten" erfolgen können, also Nähten, die vollständig auf einer ebenen Unterlage genäht werden können.

Die gattungsbildende US 2001/0040368 A1 beschreibt einen Gassack bestehend aus Wandungsteilen, die jeweils einstückig ausgebildet sind und miteinander vernäht werden. Die Öffnung für den Gassack ist mittig vorgesehen.

Aus der US 2003/0201631 A1 ist ein Gassack bekannt, der aus drei Wandungsteilen besteht, die aneinander gesetzt und miteinander vernäht werden.

Die EP 1 024 060 A1 zeigt drei Wandungsteile, die miteinander vernäht einen Gassack bilden.

Die Aufgabe der Erfindung besteht darin, einen Gassack bereitzustellen, dessen Wandungsteile mittels ebener Nähte vernäht werden können und somit die Wandungsteile automatisiert vernäht werden können.

Zu diesem Zweck sieht die Erfindung einen Gassack mit den Merkmalen des Anspruchs 1 vor.

Ein Gassack sollte im entfalteten Zustand eine ausgeprägt dreidimensionale Form haben, so daß zum einen einem zurückzuhaltenden Fahrzeuginsassen eine möglichst große Fläche zugewandt ist, die eine Rückhaltewirkung für den Kopf, den Oberkörper und möglichst auch für die Knie bzw. Oberschenkel bietet, und zum anderen eine große Tiefe erreicht wird, die einen großen Rückhalteweg ermöglicht. Eine solche ausgeprägt dreidimensionale Form wird bei der Erfindung dadurch erreicht, daß das erste Wandungsteil sich vom Armaturenbrett nach oben erstrecht, daran anschließend das dritte Wandungsteil auf der dem Fahrzeuginsassen zugewandten Seite nach vorne und unten und schließlich das zweite Wandungsteil zurück zum Armaturenbrett erstreckt. Aufgrund der möglichen Variation der gekrümmten Abschnitte der Wandungsteile kann je nach Fahrzeugtyp die Erstreckung vom Armaturenbrett nach oben bzw. zurück zum Armaturenbrett variiert werden. Da die gekrümmten Abschnitte des ersten und zweiten Wandungsteils kongruent mit den jeweiligen Abschnitten des dritten Wandungsteils sind, kann das dritte Wandungsteil an dem ersten und zweiten Wandungsteil mittels einer umlaufenden, ebenen Naht um das dritte Wandungsteil angenäht werden, wodurch ein automatisiertes Vernähen möglich ist. Das erste Wandungsteil und das zweite Wandungsteil sind einstückig miteinander ausgeführt, so daß ein zweiteiliger Gassack vorliegt, der weniger Einzelteile hat. Ferner sind die Teile asymmetrisch, um einen Falschverbau zu verhindern.

Vorzugsweise weist der zweite Abschnitt des ersten Wandungsteils geradlinige Bereiche auf, wobei der erste Abschnitt des dritten Wandungsteils dementsprechende geradlinige Bereiche aufweist. Aufgrund der geradlinigen Bereiche wird der Gassackverschnitt verringert.

Der zweite Abschnitt des ersten Wandungsteils kann eine größere Höhe haben als der zweite Abschnitt des zweiten Wandungsteils. Dadurch wird eine variierbare, schräge Aufprallfläche für den Fahrzeuginsassen bereitgestellt.

Gemäß einer Ausführungsform weisen die zweiten Abschnitte des ersten und zweiten Wandungsteils Einkerbungen auf, wobei der erste und zweite Abschnitt des dritten Wandungsteils dementsprechende Einkerbungen aufweist, wodurch ein gegenseitiges Ausrichten möglich ist, was einen Falschverbau verhindert.

Vorzugsweise sind das erste und zweite Wandungsteil mit dem dritten Wandungsteil mittels einer durchgehenden Naht vernäht. Diese Naht kann automatisiert hergestellt werden, was kostengünstig ist.

Vorzugsweise ist die vom zweiten Abschnitt abgewandte Spitze des ersten Abschnittes des ersten und des zweiten Wandungsteils abgeschnitten, so daß eine Öffnung gebildet ist. Es muß also nachträglich keine Öffnung ausgeschnitten werden.

Die Wandungsteile sind zum Beispiel aus Polyamid. Dieses Material wird bereits in Gassäcken verwendet, da es eine ausreichende Flexibilität aufweist und für jede bekannte Faltmethode angewendet werden kann.

Vorzugsweise ist ein Hitzeschutz allgemein trapezförmig ausgebildet. Die trapezförmige Form ermöglicht, daß der Hitzeschutz trichterförmig umgelegt werden kann, so daß er sich beim Aufblasen des Gassacks an die Wandungsteile anlehnt und diese vor der Hitze des ausströmenden Gases schützt.

Gemäß einer Ausführungsform weist der Hitzeschutz eine Aussparung auf, so daß eine Öffnung gebildet ist. Es muß keine nachträgliche Öffnung ausgeschnitten werden.

Nähte des Hitzeschutzes befinden sich bevorzugt außerhalb eines Einblasbereiches. Die Nähte, die besonders hitzeanfällig sind, sind somit keinen thermischen Belastungen ausgesetzt.

Der Hitzeschutz kann zum Beispiel ein beschichtetes Gewebe wie Polypropylen sein. Genausogut könnte Polyamid verwendet werden, das eine hohe Festigkeit und Temperaturbeständigkeit hat.

Weitere Merkmale und Vorteile ergeben sich aus den Unteransprüchen.

Die Erfindung wird nachfolgend anhand der bevorzugten Ausführungsform beschrieben, die in den Zeichnungen dargestellt ist. In den Zeichnungen zeigen:
- Figur 1 eine Seitenansicht eines erfindungsgemäßen Gassacks,
- Figur 2 eine Ansicht eines ersten und zweiten Wandungsteils des Gassacks,
- Figur 3 eine Ansicht eines dritten Wandungsteils des Gassacks,
- Figur 4 eine Ansicht eines Hitzeschutzes des Gassacks,
- Figur 5 eine Ansicht eines ersten Nähschritts des Gassacks,
- Figur 6 eine Ansicht eines zweiten Nähschritts des Gassacks, und
- Figur 7 eine Ansicht eines dritten Nähschritts des Gassacks.

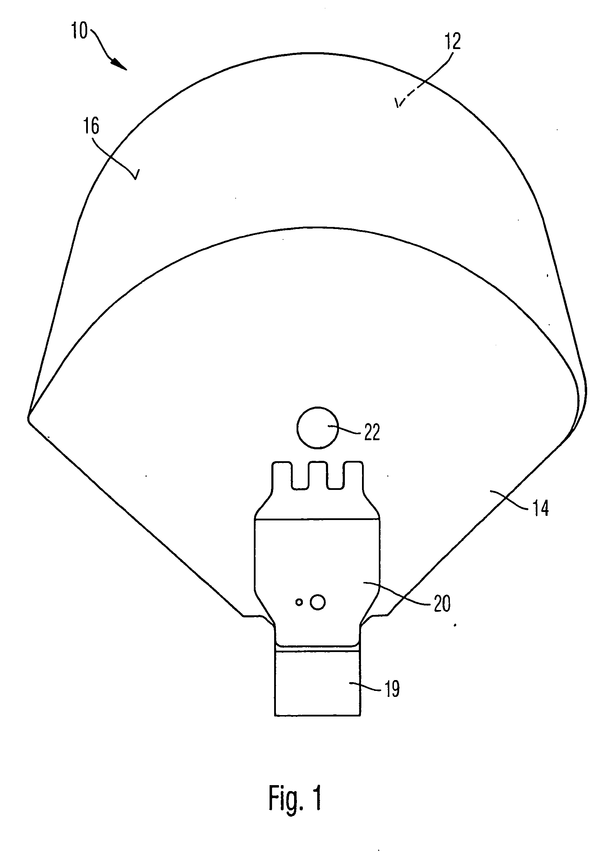

In Figur 1 ist ein Gassack 10 gezeigt, der aus einem ersten Wandungsteil 12, einem zweiten Wandungsteil 14 und einem dritten Wandungsteil 16 besteht. Die Wandungsteile 12, 14, 16 sind aus Polypropylen. Der Gassack 10 ist hier ohne einen angebrachten Gasgenerator gezeigt.

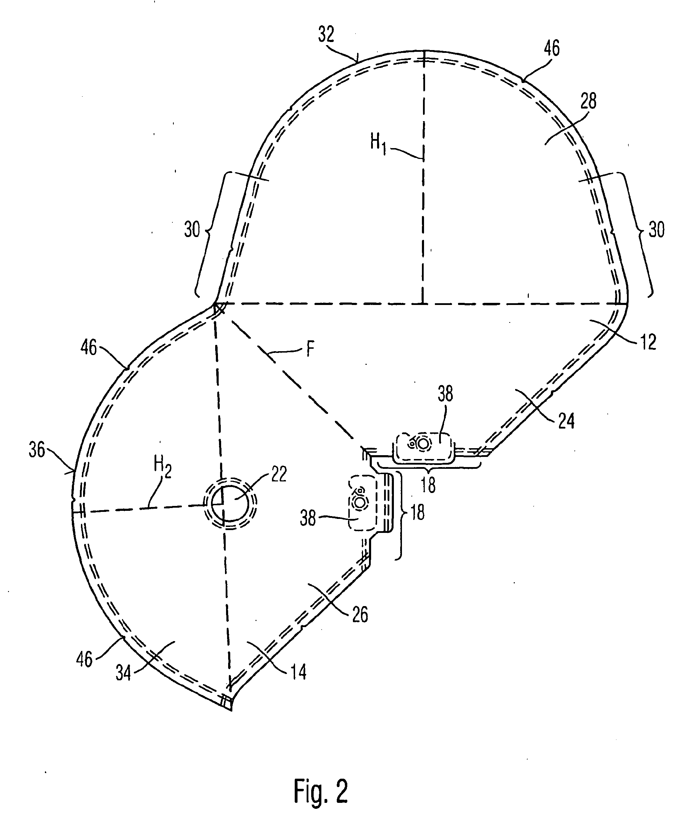

Am gemäß Figur 1 unteren Rand ist eine Öffnung 18 (Figur 2) vorgesehen, durch die sich vor dem Anbringen des Gasgenerators eine Gasumlenkung 19 erstreckt. Nach dem Einlegen des Gasgenerators wird die Gasumlenkung zusammen mit dem Gasgenerator ins Innere des Gassacks 10 gestülpt, so daß der Gasgenerator von der Gasumlenkung umgeben ist. Am zweiten Wandungsteil 14 ist eine Auslaßöffnung 22 vorgesehen, die ein Ausströmen des Gases zuläßt. Eine außenliegende Schutzabdeckung ist mit 20 bezeichnet, die ein Eindringen von Schmutz und Feuchtigkeit in ein nicht gezeigtes Gehäuse verhindern soll.

In Figur 2 ist das erste und zweite Wandungsteil 12, 14 gezeigt, die einstückig miteinander ausgeführt sind. Genausogut könnte das erste Wandungsteil 12 und das zweite Wandungsteil 14 jeweils einteilig sein und an einer Linie F miteinander vernäht oder anderweitig verbunden werden.

Zur Erleichterung der nachfolgenden Beschreibung sind die Wandungsteile 12, 14, 16 fiktiv in Abschnitte unterteilt.

Sowohl das erste Wandungsteil 12 als auch das zweite Wandungsteil 14 weisen einen allgemein dreieckigen ersten Abschnitt 24, 26 auf, die kongruent ausgebildet sind. Das erste Wandungsteil 12 hat anschließend an den ersten Abschnitt 24 einen zweiten Abschnitt 28, der achsensymmetrisch zu einer Höhe H₁ ist und aus zwei geradlinigen Bereichen 30 und einer gekrümmten Außenkontur 32 besteht.

Das zweite Wandungsteil 14 hat ebenfalls einen zweiten Abschnitt 34, der eine gekrümmte Außenkontur 36 hat und achsensymmetrisch zu einer Höhe H₂ ist.

Die Auslaßöffnung 22 ist im zweiten Wandungsteil 14 angeordnet, und zwar teilweise im ersten Abschnitt 26 und teilweise im zweiten Abschnitt 34.

Eine vom zweiten Abschnitt 28 des ersten Wandungsteils 12 abgewandte Spitze der Wandung und eine vom zweiten Abschnitt 34 des zweiten Wandungsteils 14 abgewandte Spitze der Wandung ist abgeschnitten, so daß die Öffnung 18 gebildet ist. Im Bereich der Öffnung 18 sind Abschnitte 38 vorgesehen, die der Aufnahme und Kontaktierung eines nicht gezeigten Zünders dienen. Der gezeigte Nahtverlauf hat nähtechnische Gründe.

Da das zweite Wandungsteil 14 keine geradlinigen Bereiche aufweist und die Krümmung der Außenkontur 36 geringer ist als die des ersten Wandungsteils 12, ist die Höhe H₂ des zweiten Wandungsteils geringer als die Höhe H₁ des ersten Wandungsteils 12, wodurch bei vernähten Wandungsteilen und aufgeblasenen Gassack 10 eine schräge Aufprallfläche für einen Fahrzeuginsassen vorliegt.

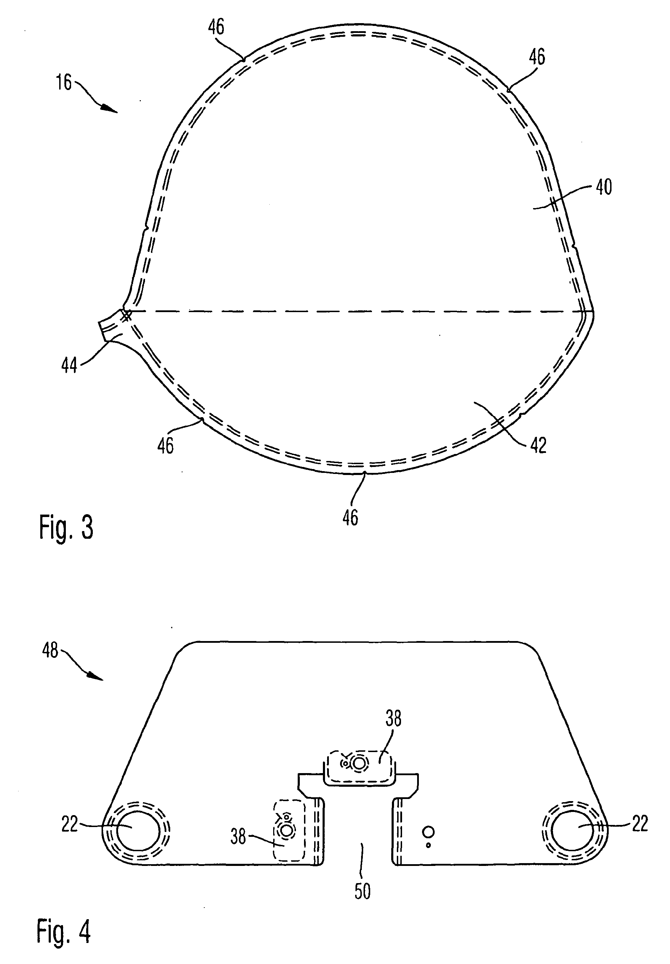

In Figur 3 ist das dritte Wandungsteil 16 gezeigt, das einen ersten Abschnitt 40 und einen zweiten Abschnitt 42 aufweist. Der erste Abschnitt 40 des dritten Wandungsteils 16 ist kongruent zum zweiten Abschnitt 28 des ersten Wandungsteils 12, während der zweite Abschnitt 42 des dritten Wandungsteils 16 kongruent mit dem zweiten Abschnitt 34 des zweiten Wandungsteils 14 ist. Zudem weist der zweite Abschnitt 42 des dritten Wandungsteils 16 eine Zunge 44 auf, die beim Vernähen hilfreich ist.

Sowohl der zweite Abschnitt 28 des ersten Wandungsteils 12, der zweite Abschnitt 34 des zweiten Wandungsteils 14 und der erste und zweite Abschnitt 40, 42 des dritten Wandungsteils 16 weisen Einkerbungen 46 auf, die beim Vernähen mit den Einkerbungen 46 der entsprechenden Abschnitte ausgerichtet werden, so daß ein Falschverbau verhindert wird.

In Figur 4 ist ein Hitzeschutz 48 gezeigt, der im allgemeinen trapezförmig ausgebildet ist. Der Hitzeschutz 48 ist einteilig und ein beschichtetes Gewebe, das hier ― wie die Wandungsteile 12, 14, 16 - aus Polypropylen ist. Genausogut könnte der Hitzeschutz 48 aus Polyamid sein.

An der gemäß Figur 4 unteren Kante, die länger als die obere Kante ist, hat der Hitzeschutz 48 eine allgemein rechteckige Aussparung 50, die die Öffnung 18 bildet. Die Aussparung 50 bzw. die Öffnung 18 hat - wie das erste und zweite Wandungsteil 12, 14 - die Abschnitte 38.

An den gemäß Figur 4 unteren Ecken sind zwei Auslaßöffnungen 22 vorgesehen, die nach dem Falten des Hitzeschutzes 48 zusammen mit dem ersten und zweiten Wandungsteil 12, 14 in einer Flucht mit der Auslaßöffnung 22 des zweiten Wandungsteils 14 liegen.

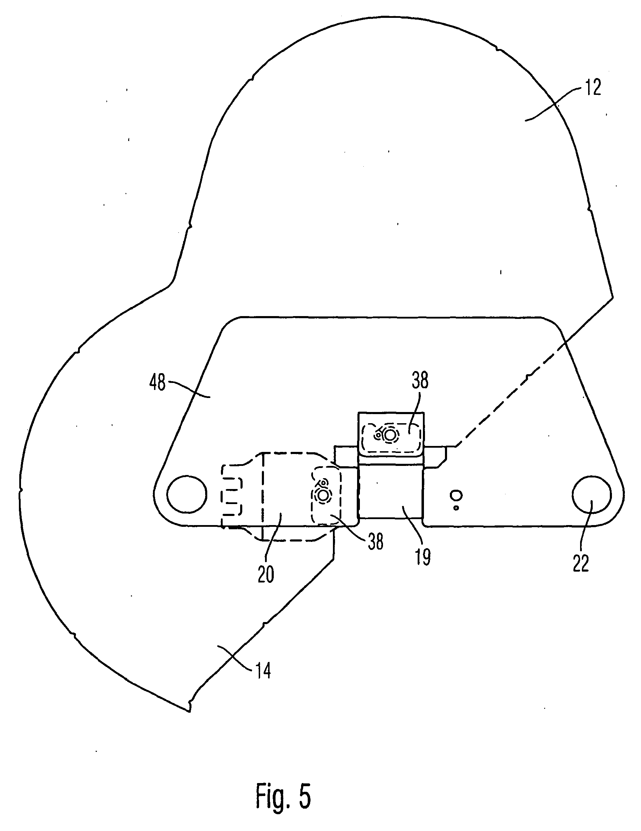

In Figur 5 ist der erste Nähschritt zur Herstellung des Gassacks 10 gezeigt. Das einstückig ausgebildete erste und zweite Wandungsteil 12, 14 wird eben ausgebreitet und der Hitzeschutz 48 und die Schutzabdeckung 20 eben darauf gelegt. Mittels einer gemäß Figur 5 waagrechten Naht wird der Hitzeschutz 48 mit dem ersten Wandungsteil 12 vernäht. Die Nähte an den Abschnitten 38 stellen eine weitere Verbindung zwischen dem Hitzeschutz 48 und dem ersten Wandungsteil 12 bzw. der Schutzabdeckung 20, dem Hitzeschutz 48 und dem zweiten Wandungsteil 14 her. Die Gasumlenkung 19, die einen aus dem Gasgenerator ausströmenden Gasstrom lenkt, wird hierbei mitangenäht.

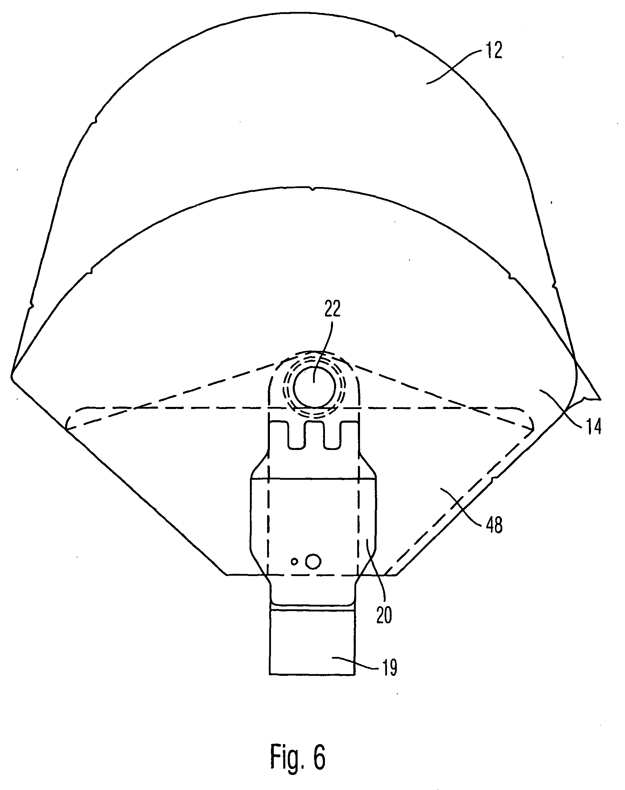

Figur 6 zeigt den zweiten Nähschritt zur Herstellung des Gassacks 10. Das zweite Wandungsteil 14 wird zunächst entlang der Linie F (Figur 2) gefaltet und auf das erste Wandungsteil 12 gelegt, so daß die seitlichen Kanten der im allgemeinen dreieckigen, kongruent ausgebildeten ersten Abschnitte 24, 26 des ersten und zweiten Wandungsteils 12, 14 zur Deckung gelangen. Der innenliegende Hitzeschutz 48 wird dabei mitgefaltet, so daß die Auslaßöffnungen 22 des Hitzeschutzes 48 zur Auslaßöffnung 22 des zweiten Wandungsteils 14 fluchten. Der Hitzeschutz 48 ist nach dem Falten trichterförmig und hat zwei Faltlinien. Die vom Hitzeschutz 48 und dem zweiten Wandungsteil 14 gebildete Auslaßöffnung 22 wird vernäht. Es wird auch die Schutzabdeckung 20 mit dem Hitzeschutz 48 und dem zweiten Wandungsteil 14 vernäht.

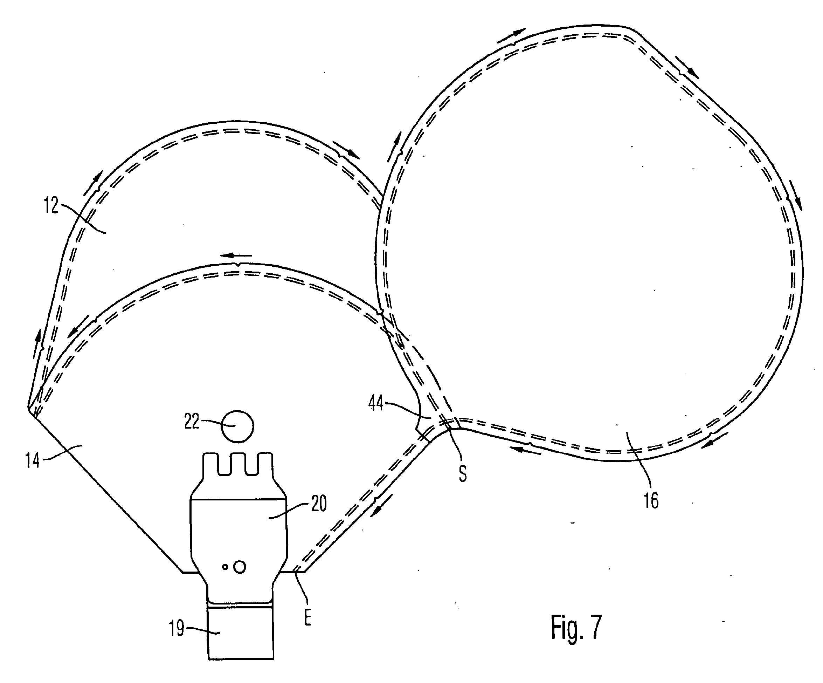

In Figur 7 ist der dritte Nähschritt zur Herstellung des Gassacks 10 gezeigt. Das dritte Wandungsteil wird so an dem zweiten Wandungsteil 14 flach angelegt, daß die Zunge 44 in Richtung des Diffusors 20 übersteht. An der Zunge 44 des dritten Wandungsteils wird der Nähvorgang begonnen, der in einem Schritt erfolgen kann und automatisiert werden kann, da nur eine ebene Naht notwendig ist. Der Nahtverlauf ist in Figur 7 mit Pfeilen dargestellt. Der Start ist mit einem S bezeichnet, während das Ende der Naht mit einem E bezeichnet ist.

Die Einkerbungen 46 des dritten Wandungsteils 16 werden beim Vernähen so ausgerichtet, daß sie auf denen des ersten und zweiten Wandungsteils 12, 14 liegen. So wird das dritte Wandungsteil 16 zuerst mit dem zweiten Abschnitt 34 des zweiten Wandungsteils 14 flach aufeinanderliegend und eben vernäht. Nach einem Drehen der Wandungsteile kann das dritte Wandungsteil 16 mit dem zweiten Abschnitt 28 des ersten Wandungsteils 12 eben vernäht werden und daraufhin entlang der Seite der im allgemeinen dreieckigen ersten Abschnitte 24, 26 des ersten und zweiten Wandungsteils 12, 14 eben vernäht werden. Dabei wird der Anfang der Naht übernäht, wodurch am Anfang S der Naht eine doppelte Naht vorliegt.

Der fertiggestellte Gassack 10 ist in Figur 1 gezeigt.

Nach dem Anbringen des Gasgenerators und nachdem der Gasgenerator zusammen mit der Gasumlenkung in das Innere des Gassacks 10 umgestülpt ist, ist die Funktionsweise der Rückhalteeinrichtung folgendermaßen:

Bei einem Aktivieren eines Gasgenerators wird das Gas durch die Gasumlenkung 19 umgelenkt. Der trichterförmige Hitzeschutz 48 lehnt sich an das erste und zweite Wandungsteil 12, 14 an, wenn das Gas einströmt und schützt dabei die Wandungsteile 12, 14, 16 vor thermischen Belastungen. Die Naht, mit der der Hitzeschutz 48 mit dem ersten Wandungsteil 12 verbunden ist, liegt außerhalb des Abströmbereichs des Gasgenerators, so daß diese Naht nicht thermisch belastet ist.

## Patentansprüche

1. Gassack bestehend aus einem ersten Wandungsteil (12), einem zweiten Wandungsteil (14) und einem dritten Wandungsteil (16), wobei das erste Wandungsteil (12) einen ersten Abschnitt (24) aufweist, der allgemein dreieckig ist, sowie einen sich daran anschließenden Abschnitt (28), der eine gekrümmte Außenkontur (32) aufweist, wobei das zweite Wandungsteil (14) einen ersten Abschnitt (26) aufweist, der mit dem ersten Abschnitt (24) des ersten Wandungsteils (12) kongruent ist, und einen sich daran anschließenden zweiten Abschnitt (34), der eine gekrümmte Außenkontur (36) aufweist, wobei das dritte Wandungsteil (16) einen ersten Abschnitt (40) aufweist, der mit dem zweiten Abschnitt (28) des ersten Wandungsteils (12) kongruent ist, und einen sich daran anschließenden zweiten Abschnitt (42), der mit dem zweiten Abschnitt (34) des zweiten Wandungsteils (14) kongruent ist, wobei das erste und das zweite Wandungsteil einstückig miteinander ausgeführt sind, **dadurch gekennzeichnet, daß** das erste Wandungsteil, das zweite Wandungsteil und das dritte Wandungsteil mittels einer einzigen, durchgehenden Naht miteinander vernäht sind.

2. Gassack nach Anspruch 1, **dadurch gekennzeichnet, daß** der zweite Abschnitt (28) des ersten Wandungsteils (12) geradlinige Bereiche (30) aufweist, wobei der erste Abschnitt (40) des dritten Wandungsteils (16) dementsprechende geradlinige Bereiche aufweist.

3. Gassack nach Anspruch 1 oder 2, **dadurch gekennzeichnet, daß** der zweite Abschnitt (28) des ersten Wandungsteils (12) eine größere Höhe H hat als der zweite Abschnitt (34) des zweiten Wandungsteils (14).

4. Gassack nach einem der vorhergehenden Ansprüchen, **dadurch gekennzeichnet, daß** die zweiten Abschnitte (28, 34) des ersten und zweiten Wandungsteils (12, 14) Einkerbungen (46) aufweisen, wobei der erste und zweite Abschnitt (40, 42) des dritten Wandungsteils (16) dementsprechende Einkerbungen (46) aufweist.

5. Gassack nach einem der vorhergehenden Ansprüchen, **dadurch gekennzeichnet, daß** die vom zweiten Abschnitt (28, 34) abgewandte Spitze des ersten Abschnittes (24, 26) des ersten und des zweiten Wandungsteils (12, 14) abgeschnitten ist, so daß eine Öffnung (18) gebildet ist.

6. Gassack nach einem der vorhergehenden Ansprüchen, **dadurch gekennzeichnet, daß** die Wandungsteile (12, 14, 16) aus Polyamid sind.

7. Gassack nach einem der vorhergehenden Ansprüchen, **dadurch gekennzeichnet, daß** der Gassack (10) einen einteiligen Hitzeschutz (48) hat.

8. Gassack nach Anspruch 7, **dadurch gekennzeichnet, daß** der Hitzeschutz (48) allgemein trapezförmig ausgebildet ist.

9. Gassack nach Anspruch 7 oder 8, **dadurch gekennzeichnet, daß** der Hitzeschutz (48) eine Aussparung (50) aufweist, so daß eine Öffnung (18) gebildet ist.

10. Gassack nach Anspruch 9, **dadurch gekennzeichnet, daß** sich Nähte des Hitzeschutzes (48) außerhalb des direkten Gasstroms befinden.

11. Gassack nach einem der Ansprüchen 7 bis 10, **dadurch gekennzeichnet, daß** der Hitzeschutz (48) ein beschichtetes Gewebe ist.

## Claims

1. An airbag consisting of a first wall piece (12), a second wall piece (14) and a third wall piece (16), the first wall piece (12) having a first section (24) that is generally triangular as well as an adjacent section (28) that has a curved outer contour (32), the second wall piece (14) having a first section (26) that is congruent with the first section (24) of the first wall piece (12) as well as an adjacent second section (34) that has a curved outer contour (36), the third wall piece (16) having a first section (40) that is congruent with the second section (28) of the first wall piece (12) as well as an adjacent second section (42) that is congruent with the second section (34) of the second wall piece (14), the first and second wall pieces being configured in one piece with each other, **characterized in that** the first wall piece, the second wall piece and the third wall piece are sewn to each other by means of a single, continuous seam.

2. The airbag according to claim 1, **characterized in that** the second section (28) of the first wall piece (12) has rectilinear portions (30), the first section (40) of the third wall piece (16) having corresponding rectilinear portions.

3. The airbag according to claim 1 or 2, **characterized in that** the second section (28) of the first wall piece (12) has a greater height H than the second section (34) of the second wall piece (14).

4. The airbag according to any of the preceding claims, **characterized in that** the second sections (28, 34) of the first and second wall pieces (12, 14) have notches (46), the first and second sections (40, 42) of the third wall piece (16) having corresponding notches (46).

5. The airbag according to any of the preceding claims, **characterized in that** the tip of the first section (24, 26) of the first and second wall pieces (12, 14) facing away from the second section (28, 34) is cut off so that an opening (18) is formed.

6. The airbag according to any of the preceding claims, **characterized in that** the wall pieces (12, 14, 16) are made of polyamide.

7. The airbag according to any of the preceding claims, **characterized in that** the airbag (10) has a one-piece heat protector (48).

8. The airbag according to claim 7, **characterized in that** the heat protector (48) has a generally trapezoidal shape.

9. The airbag according to claim 7 or 8, **characterized in that** the heat protector (48) has a recess (50) so that an opening (18) is formed.

10. The airbag according to claim 9, **characterized in that** seams of the heat protector (48) are situated outside of the direct gas flow.

11. The airbag according to any of claims 7 to 10, **characterized in that** the heat protector (48) is a coated fabric.

## Revendications

1. Coussin à gaz constitué par une première partie de paroi (12), une deuxième partie de paroi (14) et une troisième partie de paroi (16), la première partie de paroi (12) présentant un premier tronçon (24) qui est en général triangulaire, ainsi qu'un tronçon (28) qui s'y raccorde et qui présente un contour extérieur (32) arqué, la deuxième partie de paroi (14) présentant un premier tronçon (26) qui coïncide avec le premier tronçon (24) de la première partie de paroi (12), et un deuxième tronçon (34) qui s'y raccorde et qui présente un contour extérieur (36) arqué, la troisième partie de paroi (16) présentant un premier tronçon (40) qui coïncide avec le deuxième tronçon (28) de la première partie de paroi (12), et un deuxième tronçon (42) qui s'y raccorde et qui coïncide avec le deuxième tronçon (34) de la deuxième partie de paroi (14), les première et deuxième parties de paroi étant réalisées d'un seul tenant l'une avec l'autre, **caractérisé en ce que** la première partie de paroi, la deuxième partie de paroi et la troisième partie de paroi sont cousues les unes aux autres au moyen d'une seule couture continue.

2. Coussin à gaz selon la revendication 1, **caractérisé en ce que** le deuxième tronçon (28) de la première partie de paroi (12) présente des zones (30) rectilignes, le premier tronçon (40) de la troisième partie de paroi (16) présentant des zones rectilignes correspondantes.

3. Coussin à gaz selon la revendication 1 ou 2, **caractérisé en ce que** le deuxième tronçon (28) de la première partie de paroi (12) présente une hauteur H plus grande que le deuxième tronçon (34) de la deuxième partie de paroi (14).

4. Coussin à gaz selon l'une des revendications précédentes, **caractérisé en ce que** les deuxièmes tronçons (28, 34) des première et deuxième parties de paroi (12, 14) présentent des entailles (46), les premier et deuxième tronçons (40, 42) de la troisième partie de paroi (16) présentant des entailles (46) correspondantes.

5. Coussin à gaz selon l'une des revendications précédentes, **caractérisé en ce que** la pointe du premier tronçon (24, 26) des première et deuxième parties de paroi (12, 14), qui est détournée du deuxième tronçon (28, 34), est coupée de manière à former une ouverture (18).

6. Coussin à gaz selon l'une des revendications précédentes, **caractérisé en ce que** les parties de paroi (12, 14, 16) sont en polyamide.

7. coussin à gaz selon l'une des revendications précédentes, **caractérisé en ce que** le coussin à gaz (10) a une protection contre la chaleur (48) en une seule pièce.

8. Coussin à gaz selon la revendication 7, **caractérisé en ce que** la protection contre la chaleur (48) est réalisée en général en forme de trapèze.

9. Coussin à gaz selon la revendication 7 ou 8, **caractérisé en ce que** la protection contre la chaleur (48) présente un évidement (50) de manière à former une ouverture (18).

10. Coussin à gaz selon la revendication 9, **caractérisé en ce que** les coutures de la protection contre la chaleur (48) se trouvent en dehors du flux de gaz direct,

11. Coussin à gaz selon la revendication 9, **caractérisé en ce que** la protection contre la chaleur (48) est un tissu revêtu.
